# EUROPEAN PATENT SPECIFICATION

(11) **EP 1 758 738 B1**
(45) Date of publication and mention of the grant of the patent: **20.07.2011**
(21) Application number: 05755506.2
(22) Date of filing: 27.05.2005
(51) Int. Cl.: B32B 27/10, B32B 29/06, B32B 29/00

(54) **MULTI-LAYER, HIGH BARRIER PACKAGING MATERIALS**
MEHRLAGIGE VERPACKUNGSMATERIALIEN MIT HOHER SPERRWIRKUNG
MATERIAUX D'EMBALLAGE MULTICOUCHES, HAUTE BARRIERE

(30) Priority: 17.06.2004 US 580507 P
(43) Date of publication of application: 07.03.2007
(73) Proprietor: NewPage Wisconsin System Inc., Wisconsin Rapids, WI 54495 (US)
(72) Inventor: IYENGAR, Gopal, Stevens Point, Wisconsin 54481 (US); BORCHARDT, Thomas, Wisconsin Rapids, WI 54494 (US)
(74) Representative: Flosdorff, Jürgen
(86) International application number: PCT/US2005/018937
(87) International publication number: WO 2006/007239

(56) References cited:
- EP-A- 0 196 727
- WO-A-92/04187
- US-A- 4 859 244
- US-A- 4 937 139
- US-A- 4 937 139
- US-A- 5 277 988
- US-A- 5 308 441
- US-A- 5 308 441
- US-A- 5 567 473
- US-A- 5 738 933
- US-A- 5 738 933
- US-A- 5 919 863
- US-A- 5 919 863
- US-A1- 2002 150 781
- US-B1- 6 234 386
- US-B1- 6 234 386
- US-B2- 6 590 034

## Description

### Field of the Invention

The present invention is directed to multi-layer, high barrier packaging materials, and in particular to multi-layer materials with seal-peel layers used as removable lids for containers, especially food containers.

### Background of the Invention

Paper and paperboard, polymeric films ("poly") and metal foils, and laminates thereof have been developed for product packaging applications. With many products, especially food products, it is often desirable for the packaging materials to provide a barrier to the passage of fluids and/or gasses. In the prior art it is known to provide multilayer lid materials to seal plastic containers for food products, such as ice cream, yogurt, juice beverages, etc. The multilayer materials conventionally comprise a laminate of either aluminum foil/poly, or paper/aluminum foil/poly, or poly/aluminum foil/poly, each with varying oxygen and water vapor transmission barrier properties.

It is also known in the prior art to provide a "seal-peel" layer to multi-layer packaging materials. The seal-peel layer functions to seal the container that holds a food product and which can be peeled off the container when the consumer desires to open the food product package.

In some applications, packaging materials may be required to pass through metal detection apparatus, decontamination washing units and/or refrigeration in food packaging plants. Multilayer packaging materials incorporating metal foil layers often cannot be used when the packaging will be subjected to metal detection procedures. Decontamination washing and refrigeration of packaging materials expose the materials to moisture. Paper layers in multilayer packaging materials tend to absorb or wick moisture, inducing curl. Further, washing the paper/polymeric film materials can cause delamination of the polymeric film from paper, making the product undesirable for many packaging applications.

Proposals have been made to address these and other problems in the art, see for example, commonly owned U.S. Patent No. 5,738,933, which is incorporated herein by reference. Despite this and other proposals, however, problems remain unresolved in the art

US-A-5 919 863 and WO92/04187 A disclose high barrier packaging materials comprising paper substrates, polymeric barrier layers and seal-peel layers on the paper substrates The peelable seals of US-A- 5 919 863 are based on E/MA/SEMA blends with paper substrates. Both documents are silent on the nature of the sizing of the paper substrates.

US 2002/1 507 81 A1, EP-A-0 196 727 and US-A-5 277 988 disclose the use of blends of polypropylene and low density polyethylene in seal-peel layers.

### Summary of the Invention

The present application is directed to an improved multilayer packaging material comprising a moisture resistant, anti-wicking paper substrate, a barrier layer having high oxygen and water vapor barrier properties, a tie layer on the barrier layer, and seal-peel layer on the tie layer. The substrate includes melamine resin and internal size to provide moisture resistance and anti-wicking properties. The substrate has high surface energy for improved bonding to the barrier layer and for resistance to delamination during wetting or water washing. The barrier layer comprises ethylene vinyl alcohol ("EVOH"). Preferably, the tie and seal-peel layers are split into multiple layers to improve the barrier properties of the structure. The seal-peel layer is comprised of two materials one of which readily bonds to the container, while the other is a contaminant. The term "contaminant" is used herein to refer to a material that does not readily bond with the container or other structure to which the present multi-layer packaging material is sealed and thereby functions to improve easy peeling of the material from the container or other structure. The outer side of the paper substrate is coated with a water resistant pre-coat and optionally a top coat to provide a good printing surface.

The multi-layer, high barrier packaging material has particular application as lidding material For containers. In a preferred embodiment, the packaging material is adapted for releasably sealing to a plurality of containers, a first container comprised of one polymer and a second container comprised of another polymer. The seal-peel layer is comprised of a blend of a first polymer and a second polymer, thereby when the lid material is heat sealed to a first container the first polymer in the seal-peel layer bonds with the first container while the second polymer in the seal-peel layer functions as a contaminant to provide easy peeling; and when the lid material is heat sealed to a second container, the second polymer in the seal-peel layer bonds with the second container while the first polymer in the seal-peel layer functions as a contaminant to provide easy peeling. Thereby, the packaging material of the invention has enhanced functionality.

The multi-layer packaging material addresses metal detection issues pertaining to aluminum foil/poly laminates by eliminating metal foils from the structure. The material also addresses paper wicking and paper/poly delamination issues by incorporating internal sizing as well as a wet strength agent in the printing paper base substrate. This material can also be washed and refrigerated since the wet strength and anti-wick coated paper in the paper/poly laminate resists paper wetting and paper/poly delaminating problems with less curling tendency. The multi-layer packaging material also provides very good barrier properties to oxygen and water vapor transmission. The stiffness properties of the base substrate can be further enhanced by using high E-modulus additives, increasing paper basis weights and increasing bulk, which provide further advantages over aluminum. The EVOH layer provides very high oxygen transmission barrier properties at one-third the current coat weights of other polymers like polyamides used in lidding materials thus providing very good functional properties at reduced cost. In addition to the above benefits, blends of EVOH, nylon and nylon derivatives/copolymers, plus antioxidants can be used to provide strength as well as better oxygen scavenging properties to the present multilayer packaging material.

Other features and advantages of the present invention will be apparent from the following detailed description read in conjunction with the drawings.

### Brief Description of the Drawings

Fig. 1 is an exploded view of a multi-layer packaging material in accordance with one embodiment of the invention.
Fig. 2 is a schematic drawing of an extrusion coating apparatus for making the product of the invention.
Fig. 3 is a perspective view of a container with a multi-layer lid material in accordance with the invention.

### Detailed Description of the Preferred Embodiments

Turning now to the drawings, a multilayer packaging material is generally designated by the reference numeral 10. The multilayer packaging material structure comprises a base or substrate 12, one or more optional coating layers 14, 16 on the outer surface of the substrate, a barrier layer 18, one or more tie layers 20, 22 and one or more seal-peel layers 24, 26. The substrate 12 can be any material that structurally supports the other layers, and is moisture resistant. A preferred anti-wick, moisture resistant paper substrate is described below.

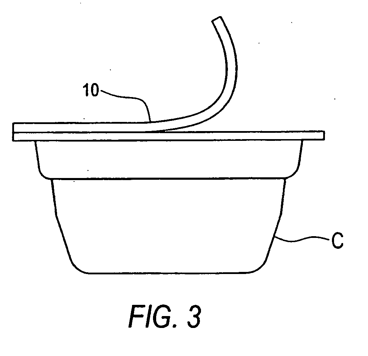

One commercial application for the packaging material 10 is as a lid structure for containers, for example, plastic food cup C shown in Fig. 3. The barrier layer 18 provides a moisture and oxygen barrier to preserve the contents of the container. The seal-peel layer bonds the lid to the container to seal the contents, while allowing a consumer to readily peel the lid from the container when desired.

A preferred substrate 12 comprises a moisture resistant, anti-wicking paper substrate. The substrate can be manufactured by conventional papermaking machines, such as a fourdrinier or top former. The furnish is a mixture of softwood and hardwood Kraft, recycled paper, fillers and additives, and has an acidic pH, preferably in the range of about 4-5. A preferred furnish comprises a mixture of about 38% bleached softwood Kraft, about 38% bleached hardwood Kraft and about 24% recycled broke (coated paper) with a filler level of about 7-8% based on ashing method. The furnish is modified by adding about 2% melamine resin and about 0.75% liquid size to improve wet strength and an anti-wick properties. It is believed that the addition of a wet strength agent such as melamine resin in the acidic furnish improves the bonding properties of the substrate to polymeric films. A suitable melamine resin is Cascomel AR-4 from Borden, Inc., 180 East Broad Street, Columbus, Ohio 43215. Preferred liquid sizing agents are Nuephor 645 emulsion sizing agent manufactured by Hercules Inc., Wilmington, Delaware as well as alkyl ketene dimer ("AKD") sizing agents, such as Hercon 70 from Hercules Inc. Persons skilled in the art will appreciate that suitable alternative and equivalents are available. Pigments and dyes may be optionally added to provide brightness and opacity properties for some applications. Paper substrate basis weights can range from about 0,04 kg/m² [25 lb/3000 ft2] to about 0,4 kg/m² [250 lb/3000 ft2]. The paper substrate may be optionally calendered or hot soft calendared to improve the printing surface and to enhance gloss properties.

Barrier layer 18 is preferably ethylene vinyl alcohol ("EVOH") with a high (for example, about 32 mole % or greater) or low (for example, about 26 mole % or less) mole percentage used as desired to attain good oxygen barrier properties. Suitable EVOH polymers are EVALF104B available from Evalca Company of America, Pasadena, Texas. Although EVOH is preferred, other oxygen barrier polymers may be used, including nylon polymers. A suitable nylon polymer is Grilon RDS 4374 or derivatives from EMS-Grivory. Sumter, South Caratima. Potentially other oxygen barrier polymers could be used as alternatives. Blends of EVOH, nylon and nylon derivatives/copolymers plus antioxidants can be used to provide strength and ductility as well as better oxygen scavenging properties to the multilayer packaging material. Desirable oxygen barrier properties cover a range of about 1 cc/m2/day to about 60 cc/m2/day tested at 23 degrees C and 60% humidity. Water vapor transmission rates cover a range from about 5 gms/m2/day to about 80 gms/m2/day at 38 degrees C and 90% humidity. Barrier layer thickness desirably ranges from about 5 microns to about 60 microns, depending on the composition of the layer and the intended commercial application of the product.

One or more tie layers 20, 22 are sandwiched between the barrier layer 18 and seal-peel layer(s) 24, 26. The tie layer functions to bond the seal-peel layer to the oxygen barrier layer. Depending on the particular composition of the barrier and seal-peel layer, the tie layer may not be necessary if a sufficient bond may be created without the tie layer. However, in most cases the tie layer may be desirable to create a good bond. A preferred tie layer material is Bynel 4288 from DuPont, Wilmington, Delaware. The tie layer is preferably about 5-20 microns thick.

One or more seal-peel layers) 24, 26 are laminated to the tie layer(s) 20, 22. The seal-peel layer functions to seal the subject multilayer packaging material to a container, such as cup for ice cream, or other package but can be peeled off by the consumer to open the container or package, e.g., to eat the ice cream. Various polymer blends can be used for the seal-peel layer depending on the composition of the container or other package to which the seal peel later is applied. The seal-peel layer is preferably, 5 to 50 microns thick. As described herein above relative to the tie layer, the extruded seal-peel polymer blend is beneficially split into two layers prior to being extrusion coated onto the substrate.

Polymer packaging containers, such a food cups, are conventionally made of polystyrene ("PS"), polypropylene ("PP"), low density polyethylene ("LDPE") and high density polyethylene ("HDPE"). In accordance with the invention, two or more polymers are blended to provide both sealing and peeling functionality to the seal-peel layer for each type of cup. EMA bonds well with PP, LDPE and HDPE, but forms poor bonds with PS containers. Styrene bonds well with PS, but bonds poorly with PP, LDPE and HDPE containers. LDPE bonds well with LDPE and HDPE but poorly with PP and PS containers. Thus, a polymer blend comprises a good bonding polymer to provide sealing functionality plus a poor bonding polymer (a "contaminant) to provide peeling functionality.

A preferred seal-peel layer comprises a blend of EMA and styrene or styrene EMA This blend will bond to all four types of polymer packaging containers mentioned above. Ratios of EMA to styrene EMA are: 60/40, 70/30 and 80/20. The EMA acts as a contaminant when the material is sealed to PS containers. The styrene component is a contaminant when the material is sealed to PP, LDPE and HDPE containers.

The foregoing seal-peel layer could be modified to provide further functionality with the addition of LDPE to the EMA and styrene EMA blend. The LDPE component will improve bonding with LDPE and HDPE containers, and function as a contaminant when used with PP and PS containers.

Another preferred seal-peel layer comprises a blend of polypropylene ("PP") and low density polyethylene ("LDPB"), which layer can bond to PP, LDPE and HDPE containers. Typical ratio ranges PP to LDPE are 50/50 and 75/25. Seal-peel layer thickness can vary from 20 gms/m2 to 60 gms/m2- The PP part heat seals well to polypropylene cups, while the LDPE portion acts as a contaminant enhancing easy peeling properties from the polypropylene cups. Having the LDPE part in the PP/PE seal-peel structure and varying the LDPE ratio in turn helps to heat seal to low density and high density polyethylene containers, while the PP acts as a contaminant thus improving easy peeling properties.

Another preferred seal peel layer comprises a blend of EMA and LDPE. This layer is adapted for use with PP containers only. Typical ratio ranges of EMA/LDPE are 50/50, 75/25 & 80/20. Seal-peel layer thickness can vary from 20 gms/m2 to 60 gms/m2. In a seal-peel layer made up of a ratio of EMA/LDPE, the EMA part bonds well to polypropylene containers, while the LDPE functions as a contaminant By varying the ratio of LDPE component as a contaminant, easy peeling properties can be attained from polypropylene cups.

Suitable polymer sources are as follows: polypropylene, P9H4M-019A from Huntsman Polymer Corporation; low density polyethylene, Petrothene NA204 or 214 from Lyondell/Equistar Chemicals LP; EMA, Lotryl 20MA08 from Atofina (now Arkema); styrene EMA, Appeel 20D752 from DuPont Packaging and Industrial Polymers.

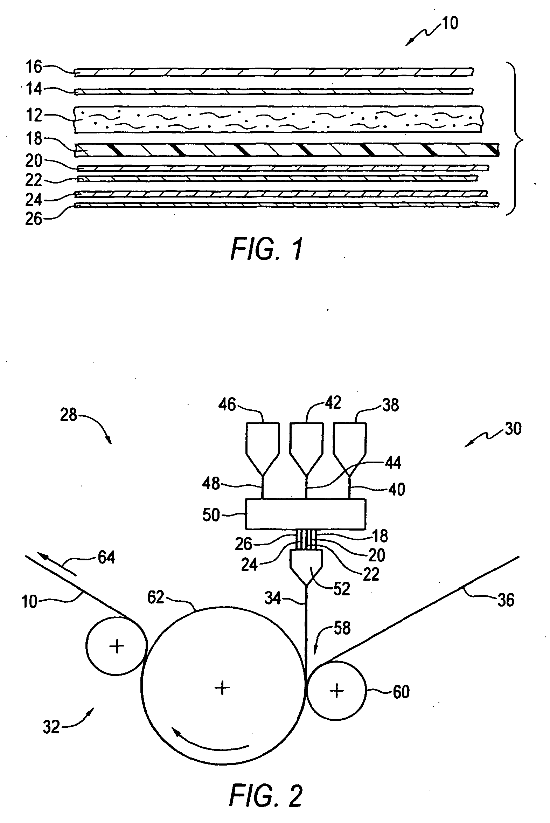

The multilayer barrier structure can be made by conventional techniques. Fig. 2 illustrates a preferred extrusion coating apparatus 28, comprising co-extruder apparatus 30 for extruding a plurality of films and a coating apparatus 32 for laminating composite film 34 to substrate 36. The co-extruder apparatus comprises a first extruder 38 for extruding barrier polymer 40, a second extruder 42 for extruding tie polymer 44 and a third extruder 46 for extruding seal-peel polymer 48. Each of the polymer streams are fed to feedblock 50. Feedblocks are well known in the art, as shown for example in U.S. Patent Nos. 4,152,387 and 4,197,069, which are hereby incorporated by reference. Feedblock 50 forms barrier layer 18. Preferably, feedblock 50 is configured to split the tie polymer into two layers 20, 22. Likewise, the seal peel polymer is split by feedblock 50 into two layers 24, 26. All five layers 18, 20, 22, 24 and 26 are then fed into a single die 52 where the layers are laminated into a single multilayer polymer laminate 34.

Those skilled in the art will appreciate that feed block technology generally includes use of a mechanical block and a selector plug to split an incoming resin feed into multiple layers, and vanes for melt flow control and distribution pins for adjusting layer distribution. It has been discovered that split layers deposited on one another offers advantages and benefits. Specifically, increased gas and vapor barrier properties may be achieved that are at least partially a result of a torturous path of gas travel required to penetrate through both layers and the reduced alignment of faults, cracks, holes, and other paths for gas and vapor transmission between the two layers.

The polymer laminate 34 is then bonded to paper web 36 by passing the polymer laminate and paper web through a nip 58 between roll 60 and chill roll 62. The multilayer packaging material 10 is cooled by chill roll 62 and proceeds in the direction 64 to further finishing and/or winding stations.

The outer or printed side of the substrate is preferably coated to improve water resistance of the substrate and to enhance printing properties. A water resistant pre-coat 14 comprises, in parts by weight per 100 parts pigment, about 0.2-0.4 parts of dispersing agent, about 15-33 parts titanium dioxide, about 25-43 parts calcined clay and about 42-60 parts #2 clay, about 2-5 parts protein binder, about 15-22 parts latex, and about 2-5 parts sizing emulsion. A preferred water resistant coating formulation comprises, in parts by weight per 100 parts of pigment, about 0.2 parts dispersing agent, about 15 parts titanium dioxide, about 25 parts dry calcined clay, about 42 parts #2 clay, and about 2 parts protein binder, about 22 parts latex, and about 2 parts sizing emulsion. All of theses constituents are well known in the art. A preferred calcined clay is Ansilex from Engelhard, Iselin, New Jersey. A preferred protein binder is 183Z protein from DuPont. A preferred sizing emulsion is Hercon 70 from Hercules or an AKD emulsion. A preferred order of addition is adding the pigments to water with the dispersant, then adding protein, latex and sizing emulsion, and finally adjusting the pH with ammonia. The water resistant coating is applied at 4-5 lbs/3000 ft2.

The top coat 16 comprises in parts by dry weight per 100 parts of pigment, about 0.2-0.6 parts dispersant, about 70-90 parts #1 clay, about 10-20 parts of plastic pigment, about 17-22 parts bimodal latex with higher glass transition temperature, about 1-4 parts polyvinyl alcohol binder, about 0.6-0.8 parts of thickener, about 2-4 parts lubricant, about 3-5 parts of fluorescent whitener, and a pH adjuster as may be necessary to adjust the pH to about 8 to 9.5. The bimodal latex used in combination with plastic pigment improves paper gloss and print quality. A preferred top coat coating composition comprises in parts by dry weight per 100 parts of pigment, about 0.2 parts dispersant, about 90 parts #1 clay, about 10 parts plastic pigment, about 17 parts bimodal latex, with higher glass transition temperatute, about I part polyvinyl alcohol binder, about 0.6 parts of thickener, about 2 parts lubricant, about 3 parts of fluorescent whitener, and a pH adjuster as may be necessary to adjust the pH to about 8 to 9.5, with 9 being preferred. All of the foregoing constituents are well know in the art A suitable plastic pigment is Ropaque AF-1055 from Rohm and Haas Company, Philadelphia, Pennsylvania. A preferred bimodal latex is XU 31060.51 styrene butadiene latex available from Dow Chemical Co., Midland, Michigan. A preferred fluorescent whitener is Tinopal from Ciba Specialty Chemical, Highpoint, North Carolina. Ammonia can be used to adjust pH. A preferred order of addition for the top coat is to disperse the pigments in water with the dispersant, then add polyvinyl alcohol, fluorescent whitener, latex thickener, and pH adjusted. The top coat is applied to the substrate, at a rate of about 0,0053-0,0061 kg/m² [3.25-.3.75 lbs/3000 ft2.]

Either or both of the pro-coa.t and top coat can also be further modified with alkyl ketene dimer (and) type sizing agents to further improve decontamination water wash properties. AKD sizing may be applied to the coating in addition to the sizing agent added directly to the furnish to further improve water resistance of the coated paper. If selected, it is preferred that AKD sizing agents be added at about 2-5 parts per 100 parts pigment.

The pro-coat and top coat may be applied to a substrate with an applicator roll inverted blade coater, short dwell coater or jet coater. Other coating techniques may also be used. Preferably the pre-coat and top coats are applied either on or off the paper machine prior to extrusion coating the polymer layers to substrate.

Although particular material suppliers have been identified, they are exemplary only and that alternative suppliers may be used. Further, unless a particular material is indicated as being critical, equivalent substitute material could be used to perform substantially the same function. The concentration ranges are based on currently available data, and minor alterations thereof may be made without departing from the scope of the claimed invention.

Benefits and utility are believed to be achieved with either the water resistant pre-coat with an alternative top coat, or the top coat described above with no pre-coat or an alternative water resistant coating. Preferably, however, both of the above described pre-coat 14 and top coat I6 are applied in combination to the substrate in the preferred ranges to give a final weight of about 0,04-0,144 kg/m² [25-90 lb/3000 ft2] with about 0,088 kg/m² [55 lb/3000 ft2] being preferred The coated paper web of the invention can then be hot soft calendered to give a glossy print side surface of about 70-90 gloss.

The multi-layer composite structure of the invention thus manufactured resists de-lamination of paper from the extruded polymers during decontamination water wash, provides anti-wicking properties during wetting and refrigeration, and also has high oxygen and water vapor barrier properties to be suitable for food packaging lid applications. Addition of size, melamine and a water resistant pre-coat contribute to anti-wicking as well as providing anti-delamination properties since they impart water resistance to paper.

The multilayer packaging material of the preferred embodiments can meet stiffness, die cutting, printing and lay flat properties suitable for high barrier lidding applications such as consumer food packaging. The preferred structures have a percentage of paper to polymers about 36 gsm polymer/90 gsm paper, with bimodal latex, plastic pigment and polyvinyl alcohol in the top coat, protein in the pro-coat and paper furnish composition are optimized to provide these properties. The paper basis weight is increased from about 40 gsm to about 100 gsm while keeping the same amount of total polymer @ 36 gsm, which increases the composite stiffness and also reduces paper curl thus improving lay flat properties. Increasing PVOH and protein levels simultaneously from about 1-3 percent based on pigments in the coating formulation can increase the extrusion coated paper/poly composite stiffness.

The following are example substrates and multilayer composite packaging material of the invention.
**Example 1:** A water resistant, coated substrate was made as follows:
   - The furnish comprised about 38% softwood Kraft, about 38% hardwood Kraft, and about 24% coated broke.
   - About 2-4% melamine resin was added to the furnish (about 20-40 lbs/ton @ about 9.5 % solids and calculated based on a production of about 9 tons/hr),
   - About 0.75% liquid size was added to the furnish (about 7.5-15 Ibs/ton @ about 44-46% solids & calculated based on a production of 9 tons/hr).
   - After formation of the substrate by a conventional paper making process, a water resistant pre-coat was applied at about 4 to 5 Ibs/3000 ft2. The water resistant coating formulation comprised, in parts by dry weight per 100 parts of pigment, about 0.2 parts dispersing agent, about 15 parts titanium dioxide, about 25 parts dry calcined clay, about 42 parts #2 clay, and about 2 parts protein binder, about 22 parts latex, and about 2 parts sizing emulsion.
   - A top coat as described above applied was over the pre-coat at about 0,0053-0.0061 kg/m² [3.25-3.75 lbs/3000 ft2]. The top coat coating composition comprised in parts by dry weight per 100 parts of pigment, about 0.2 parts dispersant, about 90 parts #1 clay, about 10 parts plastic pigment, about 17 parts bimodal latex (with higher glass transition temperature), about 1 part polyvinyl alcohol binder, about 0.6 parts of thickener, about 2 parts lubricant, about 3 parts of fluorescent whitener, and a pH adjuster as necessary to adjust the pH to about 9.
**Example 2:** A water resistant, coated substrate as in Example 1 was further modified by adding alkyl ketene dimer (AKD) sizing agents to the pre-coat formulation at about 2- 5 parts dry weight per 100 parts pigment.
**Example 3:** A water resistant, coated substrate as in Example 2 was further modified by adding alkyl ketene dimer (AKD) sizing agents to the top formulation at about 2-5 parts dry weight per 100 parts pigment.
**Example 4:** Multilayer composite packaging materials having a coated substrate as described in Examples 1, 2 and 3 were extrusion coated with an EVOH barrier layer having a target thickness of about 6 microns (which was varied between about 4-8 microns) to the uncoated side of the substrate.
**Example 5:** A multilayer composite packaging materials having a coated substrate as described in Examples 1, 2 and 3 were extrusion coated with a nylon polymer barrier layer having a target thickness of about 20 microns (which was varied between about 10-30 microns) on the uncoated side of the substrate. The nylon polymer comprised a mixture of about 20-40% amorphous nylon and about 60-80% crystalline nylon resins formulated to achieve high stiffness, tear strength and die cutting properties. The percentage of paper to polymer was about 50 gsm polymer to 90 gsm paper. Bimodal latex, plastic pigment and polyvinyl alcohol in the top coat and protein in the pre-coat along with paper furnish composition were also optimized to provide these properties. The composition of the nylon and the nylon level at about 10-30 gsm increased stiffness and tear resistance.
**Example 6:** A multilayer composite packaging materials as in Examples 4 and 5 were extrusion coated with a tie layer and a seal-peel layer. One seal-peel layer comprised of 70 parts EMA to 30 parts styrene EMA, and was extrusion coated at about 25-35 microns thickness. The packaging material of this example was heat sealed to polystyrene cups, polypropylene cups and low and high density polyethylene cups. The materials sealed well to all types of cups, and later, were easily peeled away from the cups.
**Example 7:** A multilayer composite packaging materials as in Examples 4 and 5 were extrusion coated with a tie layer and a seal-peel layer. The seal-peel layer in this example comprised of 80 parts EMA to 20 parts low density polyethylene, and was extrusion coated at about 35 microns thickness. The packaging material of this example was heat sealed to polypropylene cups. The materials sealed exceptionally well to PP cups, and later, were easily peeled away from the cups.
**Example 8:** Example 7 was repeated but with a seal-peel layer comprised of 70 parts EMA to 30 parts low density polyethylene, and was extrusion coated at about 35 microns thickness. The packaging material of this example was heat sealed to polypropylene cups. The materials sealed well, and later, were easily peeled away from the cups.
**Example 9:** Multilayer composite packaging materials as in Examples 4 and 5 were extrusion coated with a tie layer and a seal-peel layer. The seal-peel layer in this example comprised of 50 parts polypropylene to 50 parts low density polyethylene, and was extrusion coated at about 35 microns thickness. The packaging material of this example was heat sealed to both polypropylene cups and low and high density polyethylene cups. The materials sealed well to all three types of cups, and later, were easily peeled away from the cups.
**Example 10:** Example 9 was repeated but with a seal-peel layer comprised of 75 parts polypropylene to 25 parts low density polyethylene, and was extrusion coated at about 35 microns thickness. The packaging material of this example was heat sealed to both polypropylene cups and low density polyethylene cups. The materials sealed well to both types of cups, and later, were easily peeled away from the cups, however the sealing function was not as good as the 50-50 ratio of Example 9.

The multilayer composite packaging materials of Examples 4-11 have a water vapor transmission rate of not more than about 10 gms/m2/day when tested at about 50% humidity and about 23°C. The multilayer materials were subjected to water wash tests of about 10-15 seconds under a water shower and showed substantially no delamination. Further, the Example 4-11 materials did not wick when immersed in a water bath for about one hour.

It will be appreciated that although exemplary embodiments of the invention have been presented herein, the invention is not limited to any of these examples.

## Claims

1. A multi-layer high barrier packaging material, adapted for releasably sealing to a container comprising a paper base having interior and exterior surfaces; a polymer oxygen barrier layer bonded to the interior surface of said base; at least one tie layer over said barrier layer; and at least one seal-peel, layer over said tie layer, said seal-peel layer comprised of ethylene methyl acrylate blended with styrene ethylene methyl acrylate; said packing material being free of metal foils, **characterized by**:
the paper base comprising a melamine resin and an internal sizing agent; a water-resistant pre-coat on the exterior surface of said paper base, said pre-coat comprising one or more pigments, a binder and a sizing agent; and the oxygen barrier comprising ethylene vinyl alcohol and antioxidants.

2. The multi-layer, high barrier packaging material as in claim 1, wherein said seal-peel layer is split and laminated together.

3. The multi-layer, high barrier packaging material as in claim 1, wherein said sizing agent is an alkyl ketene dimer sizing agent.

4. The multi-layer, high barrier packaging material as in claim 1, wherein said tie layer is 5-20 microns thick.

5. The multi-layer, high barrier packaging material as in claim 1, wherein said seal-peel layer is laminated to said tie layer.

6. The multi-layer, high barrier packaging material as in claim 1, wherein said binder of said pre-coat is a protein binder.

7. The multi-layer, high barrier packaging material as in claim 1, further comprising a top coat composition over said pre-coat.

8. The multi-layer, high barrier packaging material as is claim 1, wherein said top-coat comprises alkyl ketene dimer sizing agent.

## Patentansprüche

1. Ein mehrlagiges Verpackungsmaterial mit hoher Sperrwirkung, das geeignet ist, einen Behälter lösbar abzudichten, mit einer Papierbasis, die eine Innen- und eine Außenfläche hat;
einer Polymersauerstoffsperrschicht, die mit der Innenfläche der Basis verbunden ist;
wenigstens einer Bindeschicht über der Sperrschicht; und
wenigstens einer Dichtungs-Ablöse-Schicht über der Bindeschicht, wobei die Dichtungs-Ablöse-Schicht aus Äthylenmethylacrylat besteht, gemischt mit Styroläthylenmethylacrylat; wobei das Verpackungsmaterial frei von Metallfolien ist,
**gekennzeichnet durch**:
die Papierbasis enthält ein Melaminharz und ein Innenschlichtmittel;
eine wasserbeständige Vorbeschichtung an der Außenfläche der Papierbasis, wobei die Vorbeschichtung ein oder mehrere Pigmente, einen Binder und ein Schlichtmittel enthält; und
die Sauerstoffsperre enthält Äthylenvinylalkohol und Antioxidanzien.

2. Das mehrlagige Verpackungsmaterial mit hoher Sperrwirkung nach Anspruch 1, wobei die Dichtungs-Ablöse-Schicht geteilt und zusammen laminiert ist.

3. Das mehrlagige Verpackungsmaterial mit hoher Sperrwirkung nach Anspruch 1, wobei das Schlichtmittel ein Alkylketendimer-Schlichtmittel ist.

4. Das mehrlagige Verpackungsmaterial mit hoher Sperrwirkung nach Anspruch 1, wobei die Bindeschicht 5 bis 20 Mikrometer dick ist.

5. Das mehrlagige Verpackungsmaterial mit hoher Sperrwirkung nach Anspruch 1, wobei die Dichtungs-Ablöse-Schicht mit der Bindeschicht laminiert ist.

6. Das mehrlagige Verpackungsmaterial mit hoher Sperrwirkung nach Anspruch 1, wobei der Binder der Vorbeschichtung ein Proteinbinder ist.

7. Das mehrlagige Verpackungsmaterial mit hoher Sperrwirkung nach Anspruch 1, ferner enthaltend eine Oberbeschichtungszusammensetzung über der Vorbeschichtung.

8. Das mehrlagige Verpackungsmaterial mit hoher Sperrwirkung nach Anspruch 1, wobei die Oberbeschichtung Alkylketendimer-Schlichtmittel enthält.

## Revendications

1. Matériau d'emballage multicouche haute barrière adapté pour un scellage amovible à un contenant comprenant une base papier ayant des surfaces intérieure et extérieure ; une couche polymère barrière à l'oxygène liée à la surface intérieure de ladite base ; au moins une couche d'attache par-dessus ladite couche barrière ; et au moins une couche de scellage pelable par-dessus ladite couche d'attache, ladite couche de scellage pelable étant composée d'éthylène-acrylate de méthyle mélangé avec du styrène-éthylène-acrylate de méthyle ; ledit matériau d'emballage étant dépourvu de feuilles métalliques, **caractérisé en ce que** :
la base papier comprend une résine mélamine et un agent de collage interne ; un prérevêtement résistant à l'eau sur la surface extérieure de ladite base papier, ledit prérevêtement comprenant un ou plusieurs pigments, un liant et un agent de collage ; et la barrière à l'oxygène comprenant de l'éthylène-alcool vinylique et des antioxydants.

2. Matériau d'emballage multicouche haute barrière selon la revendication 1, dans lequel ladite couche de scellage pelable est divisée et stratifiée ensemble.

3. Matériau d'emballage multicouche haute barrière selon la revendication 1, dans lequel ledit agent de collage est un agent de collage de dimère d'alkyl cétène.

4. Matériau d'emballage multicouche haute barrière selon la revendication 1, dans lequel ladite couche d'attache à une épaisseur de 5 à 20 microns.

5. Matériau d'emballage multicouche haute barrière selon la revendication 1, dans lequel ladite couche de scellage pelable est stratifiée sur ladite couche d'attache.

6. Matériau d'emballage multicouche haute barrière selon la revendication 1, dans lequel ledit liant dudit prérevêtement est un liant protéinique.

7. Matériau d'emballage multicouche haute barrière selon la revendication 1, comprenant en outre une composition de revêtement de finition par-dessus ledit prérevêtement.

8. Matériau d'emballage multicouche haute barrière selon la revendication 1, dans lequel ledit revêtement de finition comprend l'agent de collage de dimère d'alkyl cétène.
